# EUROPEAN PATENT SPECIFICATION

(11) **EP 1 747 244 B1**
(45) Date of publication and mention of the grant of the patent: **28.12.2016**
(21) Application number: 05738724.3
(22) Date of filing: 27.04.2005
(51) Int. Cl.: C08G 18/20, C08G 18/18, C08G 18/76, C08G 18/50, C08G 18/48

(54) **CO-CATALYSIS OF AUTOCATALYTIC POLYOLS FOR LOW DENSITY POLYURETHANE FOAMS WITH IMPROVED AGING CHARACTERISTICS**
CO-KATALYSE VON AUTOKATALYTISCHEN POLYOLEN FÜR POLYURETHANSCHAUMSTOFFE NIEDERER DICHTE MIT VERBESSERTEN ALTERUNGSEIGENSCHAFTEN
CO-CATALYSE DE POLYOLS AUTOCATALYTIQUES POUR DES MOUSSES DE POLYURÉTHANE DE FAIBLE DENSITÉ AYANT UN MEILLEUR VIEILLISSEMENT

(30) Priority: 30.04.2004 US 567351 P
(43) Date of publication of application: 31.01.2007
(73) Proprietor: Dow Global Technologies LLC, Midland, MI 48674 (US)
(72) Inventor: PRANGE, Robbyn, Pearland, TX 77584 (US); GODOY, Jose, CH-1205 Geneva (CH); CASATI, Francois, M., CH-8808 Pfaffikon (CH); DAWE, Robert, D., Sarnia, ON N7S 3S6 (CA)
(74) Representative: Beck Greener
(86) International application number: PCT/US2005/014555
(87) International publication number: WO 2005/111109

(56) References cited:
- EP-A- 0 464 464
- EP-A2- 0 573 867
- WO-A-01/58976
- WO-A-93/04103
- WO-A-2004/113410
- WO-A1-2005/042611
- US-A- 5 086 081
- US-A- 6 005 016

## Description

The present invention pertains to the co-catalysis of autocatalytic amine-based polyols with acid blocked, gelling, amine catalysts, and to the use of this catalyst combination in the production of low density polyurethane foams having superior aging characteristics, HIGHER FOAM HARDNESS and reduced VOC's (Volatile Organic Compounds).

Polyether polyols based on the polymerization of alkylene oxides, and/or polyester polyols, are the major components of a polyurethane system together with isocyanates. Polyols can also be filled polyols, such as SAN (Styrene/Acrylonitrile), PIPA (polyisocyanate polyaddition) or PHD (polyurea) polyols, as described in "Polyurethane Handbook", by G. Oertel, Hanser publisher. These systems generally contain additional components such as cross-linkers, chain extenders, surfactants, cell regulators, stabilizers, antioxidants, flame retardant additives, eventually fillers, and typically catalysts such as tertiary amines and/or organometallic salts.

Tertiary amine catalysts are of two types: the blowing catalysts more prone to activate the reaction between isocyanate and water; and the gelling type amines which are favoring the reaction between the isocyanate and the polyol. These catalytic activities are dependent on the amine structure. That is an aliphatic tertiary amine, such as bis(2-dimethylaminoethyl)ether, known as Niax*99 (trademark of General Electric) is a typical blowing catalyst, while a cyclic compound, such as triethylenediame, or Dabco* crystal (trademark of Air Products & Chemicals inc), is a standard gelling catalyst.

Organometallic catalysts, such as lead or mercury salts, can raise environmental issues due to leaching upon aging of the polyurethane products. Others, such as tin salts, are often detrimental to polyurethane aging.

Such tertiary amine catalysts are generally considered fugitive amines as they do not react into the urethane polymer matrix and remain as low molecular weight compounds in the polymer. As a result, freshly prepared foams using these catalysts often exhibit the typical odor of the amines and generate fogging (emission of volatile products or VOC). In addition, such fugitive catalysts can vapor stain polyvinyl chloride based foils used in car interior and degrade polycarbonate inserts.

Various alternative catalysts have been proposed. One is the use of amine catalysts which contain a hydrogen isocyanate reactive group, that is a hydroxyl or a primary and/or a secondary amine. Such compounds are disclosed in EP 677,540, EP 747,407, and EP 1,109,847; and U.S. Patents 3,448,065; 4,122,038; 4,368,278 and 4,510,269. A reported advantage of this catalyst composition is these amines are incorporated into the polyurethane product. However, such reactive catalysts have to be used at high levels in the polyurethane formulation to compensate for their lack of mobility during the foaming reactions and since they are monofunctional they act as chain stoppers. Hence these reactive amine catalysts have a detrimental effect on the polymer build up and affect polyurethane product physical characteristics, especially foam aging.

Acid blocked amine catalyst salts are reported to give delayed reactivity, as disclosed for instance in U.S. Patents 2,932,621; 3,769,244; 3,862,150; 4,086,213; 4,115,634; 4,165,412; 4,204,062; 4,456,696; 4,464,488; 5,489,618; 6,387,972; and EP publications 1,018,525 and 1,018,526.

Use of specific amine-initiated polyols is proposed in EP 539,819, in U.S. Patent 5,672,636 and in WO 01/ 58,976. These polyols possess autocatalytic characteristics, that is they act as catalysts per se and are incorporated into the urethane polymer. Another type of autocatalytic polyol is one containing a tertiary amine either in the chain or introduced in the capping of a polyol.

While these autocatalytic polyols are better in foam aging than reactive amines since they are not chain-stoppers, they do not fully catalyze all the polyurethane reactions, that is give a balanced profile between blowing and gelling, especially in formulations containing high water levels. They also tend to give softer foams. Hence tertiary amine based, autocatalytic polyols require a co-catalysis in low density foam formulations.

Therefore, there continues to be a need for polyols with autocatalytic activity giving a proper balance between the gelling and foaming reactions. There also continues to be a need to reduce the amount of fugitive amine in polyurethane compositions while maintaining good foam properties including good aging characteristics.

It is an object of the present invention to produce low density polyurethane foams having superior aging characteristics, HIGHER FOAM HARDNESS with the combination of autocatalytic polyols and reduced levels of fugitive amine based co-catalysts.

It is another objective of the present invention to produce polyurethane products in the absence or substantial reduction of organometallic catalysts. With the reduction of the amount of amine and reduction or elimination of organometallic catalysts, the disadvantages associated with such catalysts can be minimized or avoided.

It is a further object of the present invention to provide a polyurethane catalyst system which gives good foam cure, that is short cycle times, even at high water levels and high isocyanate indexes, while the fugitive catalyst level is minimized and VOC's are reduced.

In another aspect, the use of the new polyurethane catalysts of the present invention could reduce the level of catalysts vapors in the atmosphere in a manufacturing plant.

The present invention is a process for the production of a flexible polyurethane foam by reaction of a mixture of
(a) at least one liquid organic polyisocyanate with
(b) a polyol composition comprising
   from 5 to 98 percent by weight, based on the total amount of polyol composition (b), of a polyol compound (b1) having a functionality of 2 to 8 and a hydroxyl number of from 15 to 200 and
   the remaining from 2 to 95 percent by weight, based on the total amount of polyol composition (b), being composed of a polyol compound (b2) having a functionality of 2 to 8, a hydroxyl number of from 15 to 200 and containing at least one tertiary amine group providing autocatalytic function, which is an alkylene oxide adduct of an initiator having N-alkyl, N,N-dialkyl amino groups, or a mixture thereof, wherein the alkyl group is a C₁ to C₃ alkyl group, and
   wherein polyol (b1) does not contain at least one tertiary amine group providing autocatalytic function;
   in the presence of
(c) at least one gelling amine catalyst, which is triethylenediamine; 3-hydroxymethyl quinuclidine, 3-quinuclidinol; imidazole; 1,2-dimethylimidazole; 1-methylimidazole; 2-methyl-2-imidazolone; 1,5- diazabicyclo (4.3.0) non-ene; 1,8-diazabicyclo (5.4.0)undec-7-ene; N, N'-dimethylpiperazine; 2,4-diamino-6-methyl-1,3,5-triazine; dimethyl benzylamine, N-methyl pyrrolidone, N-vinyl pyrrolidone, N-aminopropyl-pyrrolidine, N-methyl morpholine, N-ethyl morpholine, dimethylcyclohexylamine or a mixture thereof and being not more than 80 percent, on a molar basis, acid blocked,
(d) water as a blowing agent; and
(e) optionally additives, catalysts or auxiliary agents known per se for the production of polyurethane foams.

In another embodiment, the present invention is a process whereby the polyol (b2) and acid blocked amine (c) combination is able to replace at least 10 percent (by weight) of the conventional fugitive and/or reactive amine catalysts, more preferably 20 percent and most preferably at least 30 percent, while keeping the same processing conditions when making the polyurethane foam. The most preferred level of (b2) and (c) addition is where the need for another conventional, fugitive or reactive tertiary amine catalysts or organometallic salt is eliminated.

In another embodiment, the present invention is a process whereby there is no other catalyst besides the combination of autocatalytic polyol (b2) and the acid blocked amine (c) gelling catalyst.

In another embodiment, the present invention is a process whereby the acid blocked amine (c) gelling catalyst contains a reactive hydrogen able to react with isocyanate.

In another embodiment, the present invention is a process whereby autocatalytic polyol (b2) is an alkylene oxide adduct of an initiator bearing N-methyl and/or N,N-dimethyl amino groups.

In another embodiment, the present invention is a process whereby polyol (b2) is a blend of amine initiated and amine capped polyols.

In another embodiment, the acid used to partially block the gelling amine catalyst (c) is a carboxylic acid.

In another embodiment, the acid used to partially block the gelling amine catalyst and produce catalyst (c) is a carboxylic acid containing at least one hydroxyl moiety.

In another embodiment, the present invention is a process whereby the blowing agent (d) is only water.

In another embodiment the present invention is a process whereby water level as blowing agent (d) is at least 3.5 PHP (parts per hundred parts of polyol) (b).

In another embodiment the present invention is a process whereby the polyurethane foam is molded.

In another embodiment the present invention is a process whereby the polyurethane foam density is less than 70 kg/m³.

In another embodiment the present invention is a process whereby the polyurethane molded parts are demolded in less than 8 minutes.

In another embodiment the present invention is a process whereby the polyurethane foam is used to produce multihardness foams, i.e, parts with different hardnesses.

In another embodiment the present invention is a process whereby the polyurethane foam is used to produce automotive seats and padding.

In another embodiment, the present invention is a process as disclosed above wherein the polyisocyanate (a) contains at least one polyisocyanate that is a reaction product of a excess of polyisocyanate with a polyol as defined by (b2) .

In a further embodiment, the present invention is a process as disclosed above where the polyol (b) contains a polyol-terminated prepolymer obtained by the reaction of an excess of polyol with a polyisocyanate wherein the polyol is defined by (b2).

The invention further provides for polyurethane foams produced by any of the above processes.

### Detailed Description

In accordance with the present invention, the addition of an acid blocked amine catalyst (c) to a polyurethane reaction mixture which includes an autocatalytic polyol (b2) reduces the need to use a conventional fugitive or reactive tertiary amine catalyst or an organometallic catalyst within the mixture. Optionally these acid blocked catalysts (c) contain reactive hydrogens, and can react with the isocyanate and become part of the polymer. This combination of polyol (b2) and catalyst (c) to polyurethane reaction mixtures can also reduce the mold dwell time in the production of molded foams or improve some polyurethane product properties, such as foam hardness, tear strength or heat and humid aging.

The present invention further provides a polyurethane catalysts system which gives good foam processing, that is minimal level of scrap, while the physical characteristics of the polyurethane foams made therefrom, such as foam load-bearing, tear strength, tensile strength and elongation, as well as foam aging, are not adversely affected and may even be improved by the reduction or elimination in the amount of conventional or reactive amine catalysts, and by elimination of organometallic catalysts.

The present invention also provides for a mean to adjust reactivity, such as foaming and/or gelation rates, by using the combination of autocatalytic polyols and amine based co-catalysts.

The combination of autocatalytic polyols (b2) with acid blocked cyclic amine catalysts of the gelling type (c) can be used together with conventional polyols (b1), including copolymer polyols of the SAN, PHD or PIPA type. As used herein the term polyols are those materials having at least one group containing an active hydrogen atom capable of undergoing reaction with an isocyanate. Preferred among such compounds are materials having at least two hydroxyls, primary or secondary, or at least two amines, primary or secondary, carboxylic acid, or thiol groups per molecule. Compounds having at least two hydroxyl groups or at least two amine groups per molecule are especially preferred due to their desirable reactivity with polyisocyanates.

Suitable polyols (b1) that can be used to produce polyurethane foams of the present invention are well known in the art and include those described herein and any other commercially available polyol and/or SAN, PIPA or PHD copolymer polyols. Such polyols are described in "polyurethane Handbook", by G. Oertel, Hanser publishers. Mixtures of one or more polyols and/or one or more copolymer polyols may also be used to produce polyurethane products according to the present invention.

The polyol composition (b) comprises from 5 to 98 percent, preferably 5 to 97 percent and more preferably 5 to 95 percent by weight of polyol (b1) with the remainder polyol (b2) where the total percent of (b1) and (b2) is 100.

Representative polyols include polyether polyols, polyester polyols, polyhydroxy-terminated acetal resins, hydroxyl-terminated amines and polyamines. Examples of these and other suitable isocyanate-reactive materials are described more fully in U.S. Patent 4,394,491. Alternative polyols that may be used include polyalkylene carbonate-based polyols and polyphosphate-based polyols. Preferred are polyols prepared by adding an alkylene oxide, such as ethylene oxide, propylene oxide, butylene oxide or a combination thereof, to an initiator having from 2 to 8, preferably 2 to 6 active hydrogen atoms. Catalysis for this polymerization can be either anionic or cationic, with catalysts such as KOH, CsOH, boron trifluoride, or a double cyanide complex (DMC) catalyst such as zinc hexacyanocobaltate or quaternary phosphazenium compound. When producing polyols using an alkaline catalyst, these catalysts are preferably removed from the polyol at the end of production by a proper finishing step, such as coalescence, magnesium silicate separation or acid neutralization/filtration.

The polyol or blends thereof employed depends upon the end use of the polyurethane foam to be produced. The hydroxyl number and molecular weight of the polyol or polyols employed can vary accordingly over a wide range. In general, the hydroxyl number of the polyols employed may range from 15 to 200.

In the production of a flexible polyurethane foam, the polyol is preferably a polyether polyol and/or a polyester polyol. The polyol generally has an average nominal functionality ranging from 2 to 5, preferably 2 to 4, more preferably 3-4 and an average hydroxyl number ranging from 15 to 200 mg KOH/g, preferably from 20 to 70 mgKOH/g. A polyol blend may contain polyols outside the preferred ranges for functionality and hydroxyl number provided the overall polyol blend contains values within the parameters above. As a further refinement, the specific foam application will likewise influence the choice of base polyol. As an example, for molded foam, the hydroxyl number of the base polyol may be on the order of 20 to 60 with ethylene oxide (EO) capping, and for slabstock foams the hydroxyl number may be on the order of 25 to 75 and is either mixed feed EO/PO (propylene oxide) or is only slightly capped with EO or is 100 percent PO based.

The initiators for the production of polyols (b1) generally have 2 to 8 functional groups that will react with the alkylene oxide. Examples of suitable initiator molecules are water, organic dicarboxylic acids, such as succinic acid, adipic acid, phthalic acid and terephthalic acid and polyhydric, in particular dihydric to octahydric alcohols or dialkylene glycols, for example ethanediol, 1,2- and 1,3-propanediol, diethylene glycol, dipropylene glycol, 1,4-butanediol, 1,6-hexanediol, glycerol, trimethylolpropane, pentaerythritol, sorbitol and sucrose or blends thereof. Autocatalytic polyols (b2) are based on a polyol containing an amine. The initiator of polyol (b2) contains a N-alkyl, N,N-dialkylamine group or a mixture thereof wherein the alkyl group is a C₁ to C₃ alkyl. Preferably the initiator contains an N-methyl and/or a N,N-dimethyl amino group. Such autocatalytic polyols are known in the art. Examples of suitable initiators include those disclosed in U.S. Patents 5,476,969 and 5,672,636, tertiary amine diols as disclosed in EP 0488219 B1 and EP Publications 1268598, 1319034, and 1419189. Alternatively, integration of tertiary amine functions in the polyol chain can be done by using an alkylaziridine as a co-monomer when making the polyether polyol. Polyols containing a tertiary amine can also be obtained by capping a polyol with a tertiary amine group, for example N,N-dialkyl-glycidylamine, as described in WO 94/02,525.

Examples of preferred initiators containing a tertiary amine include N,N-dimethyl-1,3-diaminopropane, N,N-dimethyl-1,4-diaminobutane, N,N-dimethyldipropylenetriamine, N,N'-bis(3-aminopropyl)detylenediamine, tripropylenetetramine, tetrapropylenepentamine, 3,3'-diamino-N-methyldipropylamine, 3,3'-diamino-N-ethyldipropylamine, 2,2'-diamino-N-methyldiethylamine, N-methyldiethanolamine, N-methyldipropanolamine, N-(2-hydroxyethyl)-N-methyl-1,3,-propanediamine, N-(2-hydroxyethyl)-N-methyl-1,2-ethanediamine, N,N-dialkyl glycidylamine, N-methyl-1,2-ethanediamine, N-methyl-1,3-propanediamine, N-N-dimethyl-tris(hydroxymethyl) aminomethane, 3,3'diamino-N-methyldipropylamine, 2,2'-diamino-N-methyldiethylamine, 2,3-diamino-N-methyl-ethyl propylamine, and 3,3'-diamino-N-methyldipropylamine. Particularly preferred are polyols initiated with 3,3'-diamino-N-methyldipropylamine, N-(2-hydroxyethyl)-N-methyl-1,3-propanediamine, and N,N-dimethydipropylenetriamine.

The properties of the autocatalytic polyols can vary widely as described above for polyol (b1) and such parameters as average molecular weight, hydroxyl number, functionality will generally be selected based on the end use application of the formulation, that is, what type of polyurethane product. Selection of a polyol with the appropriate hydroxyl number, level of ethylene oxide, propylene oxide and butylene oxide, functionality and equivalent weight are standard procedures known to those skilled in the art. For example, polyols with a high level of ethylene oxide will be hydrophilic and may be more prone to catalyze the water-isocyanate or urea reaction while polyols with a high amount of propylene oxide or butylenes oxide will be more hydrophobic and will favor the urethane reaction.

The acid blocked amine catalyst (c) is either liquid or solid at room temperature. It can be dissolved in glycol or water or any other proper solvent or diluent. Amines used to form the amine salt with an acid are triethylenediamine or (TEDA); 3-hydroxymethyl quinuclidine, 3-quinuclidinol; imidazole; 1,2-dimethylimidazole; 1-methylimidazole; 2-methyl-2-imidazolone; 1,5-diazabicyclo(4.3.0)non-ene or (DBN); 1,8-diazabicyclo(5.4.0) undec-7-ene or DBU); N,N'-dimethylpiperazine; 2,4-diamino-6-methyl-1,3,5-triazine; dimethyl benzylamine, N-methyl pyrrolidone, N-vinyl pyrrolidone, N-aminopropyl-pyrrolidine, N-methyl morpholine, N-ethyl morpholine, and dimethylcyclohexylamine. It has been found surprisingly that, when partially acid blocked and used with amine based autocatalytic polyols (b2), they give better balanced polyurethane reactions, leading to improved foam aging characteristics.

Acid blocked gelling catalysts can be made through various chemistries. Preferably they are combined with a diluent, or a solvent when they are solid, and the acid is then slowly added under stirring while exotherm is controlled via proper cooling of the reactor.

The acids used to neutralize the cyclic amine and get the catalyst (c) can be organic acids, such as carboxylic acids or amino-acids, or non-organic acids, such as sulfuric or phophoric acids. Preferably these acids are carboxylic, such as formic or acetic acids, and more preferably they contain a hydroxyl functionality, as described in US patent 5,489,618. Preferred hydroxyl-carboxylic acids disclosed in 5,489,618 include citric acid, dimethylolproprionic acid, 2-hydroxymethylpropionic acid, salicylic acid, m-hydroxy benzoic acid, p-hydroxyl benzoic acid, glycolic acid, gluconic acid, β-hydroxybutyric acid, cresoic acid, 3-hydroxy-2-naphthoic acid, lactic acid, tartaric acid, malic acid, resorcylic acid, hydroferulic acid and mixtures thereof. Other preferred acids are carboxylic acids containing halofunctionality, as described in EP 1,018,525; or aryloxy substituted carboxylic acids, as described in EP 1,018,526. The acid can also be an ester, as described in U.S. Patent 6,432,86; It can also be a diacid, as disclosed in EP 989,146. Another possibility are unsaturated acids, such as acrylic acid.

The molar ratio between the acid and the amine is less than 0.8 which means than not more than 80 percent of the amine is neutralized when this amine contains one tertiary amine group. Preferably the amine is neutralized at less than 50 percent, that is only 50 percent or less of the tertiary nitrogens are blocked. More preferably the amine is neutralized at less than 25 percent.

Without being bound by any theory, it is thought that the acid used to block the gelling amine to get catalyst (c) will neutralize some of the autocatalytic polyol (b2) once the polyol, water, amine, surfactant, crosslinker blend is made to prepare the polyurethane foam. The same may occur when another amine co-catalyst is added. Additionally the crosslinker can also be partially neutralized, when it is amine based, as the case with diethanolamine, triethanolamine.

It is essential that the amines used for catalyst (c) are cyclic in order to give good gelling catalytic activity, as blowing amines, such as aliphatic tertiary amines, once neutralized with an acid, do not give the balanced catalytic profile needed to get better foam characteristics as observed in the present invention. This is also critical when high water levels are used in the formulation for the production of foam with low densities. Again, without being bound by any theory, it is thought that the combination polyol (b2) and acid blocked aliphatic amines gives a reaction profile too close to the blowing side and not enough on the gelling side.

The weight ratio of acid blocked, gelling, amine catalyst (c) to polyol (b2) will vary depending onto the reaction profile required by the specific application. Usually polyol (b2) will be used at levels up to 100 parts, but preferably at a level below 60 parts, while catalyst (c) will be used at levels below 2 parts, more preferably at levels below 1 part. Generally if a reaction mixture with a base level of catalyst having specified curing, the combination polyol (b2) and catalyst (c) is added in an amount so that the curing time is equivalent where the reaction mix contains at least 10 percent by weight less conventional catalyst. Preferably the combination of (b2) and(c) is added to give a reaction mixture containing 20 percent less catalyst than the base level. More preferably the addition of (b2) and (c) will reduce the amount of catalyst required by 30 percent over the base level. The most preferred level of (b2) and (c) addition is where the need for another conventional, fugitive or reactive tertiary amine catalysts or organometallic salt is eliminated.

In another embodiment, the level of conventional amine and organometallic catalysts levels may be kept at the same level and the combination of autocatalytic polyols and acid blocked amines can be used to decrease the mold dwell time through faster foam curing.

Combination of two or more acid blocked, gelling, amine catalysts (c) or combination of two or more autocatalytic polyol (b2) can also be used with satisfactory results in a single polyurethane formulation. When one wants to adjust blowing and gelling reactions, for instance, modifying the amine structures either of the autocatalytic polyol (b2) or of the gelling catalyst (c) with different tertiary amines, functionalities, equivalent weights, and their respective amounts in the formulations. Combination of acids to neutralize the gelling amine(s) can also be contemplated for the same reason, that is adjustment of reaction profile and eventually of delayed action.

Polyols pre-reacted with polyisocyanates and polyol (b2) with no free isocyanate functions can also be used in the polyurethane formulation. Isocyanate prepolymers based on polyol (b2) can be prepared with standard equipment, using conventional methods, such a heating the polyol (b2) in a reactor and adding slowly the isocyanate under stirring and then adding eventually a second polyol, or by prereacting a first polyol with a diisocyanate and then adding polyol (b2).

The isocyanates which may be used with the autocatalytic polymers of the present invention include aliphatic, cycloaliphatic, arylaliphatic and aromatic isocyanates. Aromatic isocyanates, especially aromatic polyisocyanates are preferred.

Examples of suitable aromatic isocyanates include the 4,4'-, 2,4' and 2,2'-isomers of diphenylmethane diisocyante (MDI), blends thereof and polymeric and monomeric MDI blends toluene-2,4- and 2,6-diisocyanates (TDI), m- and p-phenylenediisocyanate, chlorophenylene-2,4-diisocyanate, diphenylene-4,4'-diisocyanate, 4,4'-diisocyanate-3,3'-dimehtyldiphenyl, 3-methyldiphenyl-methane-4,4'-diisocyanate and diphenyletherdiisocyanate and 2,4,6-triisocyanatotoluene and 2,4,4'-triisocyanatodiphenylether.

Mixtures of isocyanates may be used, such as the commercially available mixtures of 2,4- and 2,6-isomers of toluene diisocyantes. A crude polyisocyanate may also be used in the practice of this invention, such as crude toluene diisocyanate obtained by the phosgenation of a mixture of toluene diamine or the crude diphenylmethane diisocyanate obtained by the phosgenation of crude methylene diphenylamine. TDI/MDI blends may also be used. MDI or TDI based prepolymers can also be used, made either with polyol (b1), polyol (b2) or any other polyol as described heretofore. Isocyanate-terminated prepolymers are prepared by reacting an excess of polyisocyanate with polyols, including aminated polyols or imines/enamines thereof, or polyamines.

Examples of aliphatic polyisocyanates include ethylene diisocyanate, 1,6-hexamethylene diisocyanate, isophorone diisocyanate, cyclohexane 1,4-diisocyanate, 4,4'-dicyclohexylmethane diisocyanate, saturated analogues of the above mentioned aromatic isocyanates and mixtures thereof.

The preferred polyisocyantes for the production of rigid or semi-rigid foams are polymethylene polyphenylene isocyanates, the 2,2', 2,4' and 4,4' isomers of diphenylmethylene diisocyanate and mixtures thereof. For the production of flexible foams, the preferred polyisocyanates are the toluene-2,4- and 2,6-diisocyanates or MDI or combinations of TDI/MDI or prepolymers made therefrom.

Isocyanate tipped prepolymer based on polyol (b2) can also be used in the polyurethane formulation.

For producing a polyurethane-based foam, a blowing agent is generally required. In the production of flexible polyurethane foams, water is used as a blowing agent. The amount of water is preferably in the range of from 0.5 to 10 parts by weight, more preferably from 2 to 7 parts by weight based on 100 parts by weight of the polyol. Other blowing agents can be liquid or gaseous carbon dioxide, methylene chloride, acetone, pentane, isopentane, methylal or dimethoxymethane, dimethylcarbonate. Use of artificially reduced, or increased, atmospheric pressure can also be contemplated with the present invention.

In addition to the foregoing critical components, it is often desirable to employ certain other ingredients in preparing polyurethane polymers. Among these additional ingredients are other amine catalyst, surfactants, preservatives, flame retardants, colorants, antioxidants, reinforcing agents, stabilizers and fillers, including polyurethane foam recycled powder.

In making polyurethane foam, it is generally preferred to employ an amount of a surfactant to stabilize the foaming reaction mixture until it cures. Such surfactants advantageously comprise a liquid or solid organosilicone surfactant. Other surfactants include polyethylene glycol ethers of long-chain alcohols, tertiary amine or alkanolamine salts of long-chain alkyl acid sulfate esters, alkyl sulfonic esters and alkyl arylsulfonic acids. Such surfactants are employed in amounts sufficient to stabilize the foaming reaction mixture against collapse and the formation of large, uneven cells. Typically, 0.2 to 3 parts of the surfactant per 100 parts by weight total polyol (b) are sufficient for this purpose.

A crosslinking agent or a chain extender may be added, if necessary. The crosslinking agent or the chain extender includes low-molecular polyhydric alcohols such as ethylene glycol, diethylene glycol, 1,4-butanediol, and glycerin; low-molecular amine polyol such as diethanolamine and triethanolamine; polyamines such as ethylene diamine, xlylenediamine, and methylene-bis(o-chloroaniline). The use of such crosslinking agents or chain extenders is known in the art as disclosed in U.S. Patents 4,863,979 and 4,963,399 and EP 549,120.

When preparing foams for use in transportation, a flame retardant is sometimes included as an additive. Any known liquid or solid flame retardant can be used with the autocatalytic polyols of the present invention. Generally such flame retardant agents are halogen-substituted phosphates and inorganic flame proofing agents. Common halogen-substituted phosphates are tricresyl phosphate, tris(1,3-dichloropropyl phosphate, tris(2,3-dibromopropyl) phosphate and tetrakis (2-chloroethyl)ethylene diphosphate. Inorganic flame retardants include red phosphorous, aluminum oxide hydrate, antimony trioxide, ammonium sulfate, expandable graphite, urea or melamine cyanurate or mixtures of at least two flame retardants. In general, when present, flame retardants are added at a level of from 5 to 50 parts by weight, preferable from 5 to 25 parts by weight of the flame retardant per 100 parts per weight of the total polyol present. Although most flame retardant additives are acidic by nature, it was is discovered that the use of such additives is compatible with the present invention.

The applications for foams produced by the present invention are those known in the industry. Flexible foams find use in applications such as furniture, mattresses, sofas, packaging, shoe soles, automobile seats, sun visors, armrests, door panels, noise insulation parts and dashboards.

Processing for producing polyurethane products are well known in the art. In general components of the polyurethane-forming reaction mixture may be mixed together in any convenient manner, for example by using any of the mixing equipment described in the prior art for the purpose such as described in "Polyurethane Handbook", by G. Oertel, Hanser publisher.

The polyurethane products are either produced continuously or discontinuously, by injection, pouring, spraying, casting, calendering; these are made under free rise or molded conditions, with or without release agents, in-mold coating, or any inserts or skin put in the mold. In case of flexible foams, those can be mono- or dual-hardness.

The following examples are given to illustrate the invention and should not be interpreted as limiting in anyway. Unless stated otherwise, all parts and percentages are given by weight.

A description of the raw materials used in the examples is as follows.
- DEOA: is 85 percent diethanolamine in water.
- Niax Y-10184: is a silicone based surfactant Available from General Electric.
- Dabco DC 5169: is a silicone-based surfactant available from Air Products and Chemicals Inc.
- Dabco 33 LV: is a tertiary amine catalyst available from Air Products and Chemicals Inc.
- DABCO 8154: is a proprietary acid blocked, gelling, tertiary amine available from Air Products & Chemicals Inc.
- Niax A-1: is a tertiary amine catalyst Available from General Electric.
- Niax A-300: is a proprietary acid blocked, gelling, tertiary amine catalyst available from General Electric.
- Niax A-400: is a proprietary acid blocked, blowing, tertiary amine catalyst available from General Electric.
- Salicylic Acid: is a carboxylic acid available from Aldrich.
- Polyol A: is a 1,700 equivalent weight (EW) propoxylated tetrol initiated with 3,3'-diamino-N-methyl dipropylamine and capped with 15 percent ethylene oxide.
- Polyol B: is a 1,700 equivalent weight propoxylated tetrol initiated with 3,3'-diamino-N-methyl dipropylamine and capped with 20 percent ethylene oxide.
- SPECFLEX NC 632: is a 1,700 EW polyoxypropylene polyoxyethylene polyol initiated with a blend of glycerol and sorbitol available from The Dow Chemical Company.
- Specflex NC-630: is a 1,700 EW polyoxypropylene polyoxyethylene polyol initiated with a blend of glycerol and sucrose available from The Dow Chemical Company.
- Voranol 4053: is a high EO containing hexol, used as a cell opener available from The Dow Chemical Company
- SPECFLEX NC-700: is a 40 percent SAN based copolymer polyol with an average hydroxyl number of 20 available from The Dow Chemical Company.
- VORANATE T-80: is TDI 80/20 isocyanate available from The Dow Chemical Company.

Foams made in the laboratory on the bench are produced by preblending polyols, surfactants, crosslinkers, catalysts and water, conditioned at 25° C. Isocyanate also conditioned at 25°C is added under stirring at 3,000 RPM for 5 seconds. At the end of mixing the reactants are poured in a 30x30x10 cm aluminum mold heated at 60°C which is subsequently closed. The mold is sprayed with the release agent Klueber 41-2013, available from Klueber Chemie, prior to use. Foam curing at 4 minutes is assessed by manually demolding the part, looking for internal and external defects. If none, the part is rated as OK.

Machine made foams are prepared using a Cannon high pressure machine. Mold size is 40x40x10 cm and demolding time is 6 minutes.

All foams are tested according to ASTM D-3574-83 test methods.

### Comparative Example 1A

Preparation of acid blocked, gelling, cyclic amine catalyst (c):
In 88.83 grams of water, 10.16 grams (or 0.0299 mmol TEDA) of Dabco 33 LV are added. The blend is stirred at room temperature to get a homogeneous blend. Then 1.01 grams (or 0.0073 mmol) of salicylic acid is slowly dissolved under stirring. After a slight exotherm, a homogeneous solution is obtained after cooling at room temperature. This example 1a is not part of the invention. This corresponds to approximately 12.2 percent amine blocking or 24.4 percent on a molar basis.

### Example 1

Preparation of a polyol masterbatch:
The following polyol blend is made (values in grams):

| | |
|---|---|
| Solution example 1A | 3.94 |
| Specflex NC-632 | 20 |
| Specflex NC-700 | 30 |
| Polyol A | 50 |
| DEOA | 0.8 |
| Dabco DC-5169 | 0.60 |

Example 2 of the present invention shows that a good blend is obtained when polyol A, an amine initiated polyol, is blended with other polyols, a crosslinker, a surfactant and an acid-blocked amine catalyst. Based on all the amines in this blend, the amount acid neutralization is less than 1 percent.

### Example 2 and Comparative 2A

Foaming tests on the bench are done using the following formulations in Table 1. Values of material added are parts by weight.

**Table 1**

| Example | 2 | 2A |
|---|---|---|
| Polyol blend example 1 | 105.34 | |
| Specflex NC-632 | | 20 |
| Specflex NC-700 | | 30 |
| Polyol A | | 50 |
| water | | 3.5 |
| Dabco 33LV | | 0.4 |
| DEOA | | 0.8 |
| Dabco DC-5169 | | 0.6 |
| | | |
| Voranate T-80 | Index 100 | Index 100 |
| | | |
| Foam core density (kg/m3) | 31.9 | 31.9 |
| Airflow (cfm) | 4.1 | 4.5 |
| 50 % CFD (KPa) | 5.2 | 4.5 |
| 50 % HACS (%) | 13.9 | 16.1 |
| 75 % HACS (%) | 13.9 | 14.5 |

| | | |
|---|---|---|
| HACS means Humid Aged Compression Sets. This test is run at both 50 percent and 75 percent deflection. | | |

Example 2 shows that a small addition of acid to the foam formulation to partially block the amine TEDA gives the same processing, especially demolding time, while foam humid aging is improved vs comparative example 2A based on a conventional, non acid blocked amine catalyst and foam is harder based on the 50 percent CFD (compression force deflection) test.

### Example 3 and Comparatives 3A, 3B, 3C

Foam production with a high pressure Cannon machine is done using the following formulations:

| Example | 3 | 3A | 3B | 3C |
|---|---|---|---|---|
| Specflex NC-630 | 25 | 62.5 | 25 | 25 |
| Specflex NC-700 | 37.5 | 37.5 | 37.5 | 37.5 |
| Polyol B | 37.5 | 0 | 37.5 | 37.5 |
| Voranol 4053 | 0 | 1 | 1 | 1 |
| Water | 3.77 | 3.92 | 3.92 | 3.89 |
| DEOA | 1.88 | 1.88 | 1.88 | 1.88 |
| Niax A-1 | | 0.08 | | |
| Dabco 33 LV | | 0.35 | 0.3 | 0.3 |
| Niax A-300 | 0.3 | | | |
| Niax A-400 | | | | 0.1 |
| Niax Y-10184 | 1 | 1.2 | 1 | 1 |
| | | | | |
| Voranate T-80 (index) | 105 | 105 | 105 | 105 |
| | | | | |
| Core density (kg/m3) | 25.6 | 27.2 | 27.2 | 25.6 |
| Airflow (cfm) | 1.6 | 1.2 | 2.1 | 1.6 |
| 50 % HACS (%) | 16.1 | 20.6 | 22 | 20.5 |
| 75 % HACS (%) | 17.5 | 19.2 | 50.6 | 54.2 |

| | | | | |
|---|---|---|---|---|
| Niax A-300 contains 50 % water | | | | |

Example 3 shows that the combination of autocatalytic polyol B, of the (b2) type, with an acid blocked, gelling catalyst, such as Niax A-300, gives superior foam aging characteristics while overall amine concentration is substantially reduced versus the control (example 3A not part of this invention) which is based on conventional polyols and normal catalysts (Niax A-1 and Dabco 33 LV). Furthermore, with Example 3, Niax A-1 is eliminated, while foam processing, especially demolding time, is un-affected.

Comparative examples 3B and 3C (not part of this invention) show that use of Dabco 33 LV, a straight gelling amine catalyst, by itself, or combined with Niax A-400, an acid blocked blowing amine catalyst, when combined with autocatalytic polyol B, of the (b2) type, does not give a foam with properties as good as that obtained by the present invention.

### EXAMPLE 4

The following formulation (see table below) give a low density foam with good green strength at 6 minutes demolding time and acceptable compression set:

| Raw Materials | Example 4 |
|---|---|
| Specflex NC-630 | 25 |
| Specflex NC 700 | 37.5 |
| Polyol B | 37.5 |
| Water | 3.77 |
| DEOA | 1.88 |
| Dabco 8154 | 0.3 |
| Niax Y-10184 | 1 |
| Voranate T-80 (index) | 105 |
| | |
| Core density (kg/m3) | 27 |
| 50 % Compression Set (%) | 22 |

Other embodiments of the invention will be apparent to those skilled in the art from a consideration of this specification or practice of the invention disclosed herein. It is intended that the specification and examples be considered as exemplary only, with the true scope of the invention being indicated by the following claims.

## Claims

1. A process for the production of a flexible polyurethane foam by reaction of a mixture of
(a) at least one liquid organic polyisocyanate with
(b) a polyol composition comprising
from 5 to 98 percent by weight, based on the total amount of polyol composition (b), of a polyol compound (b1) having a functionality of 2 to 8 and a hydroxyl number of from 15 to 200 and
the remaining from 2 to 95 percent by weight, based on the total amount of polyol composition (b), being composed of a polyol compound (b2) having a functionality of 2 to 8, a hydroxyl number of from 15 to 200 and containing at least one tertiary amine group providing autocatalytic function, which is an alkylene oxide adduct of an initiator having N-alkyl, N,N- dialkyl amino groups, or a mixture thereof, wherein the alkyl group is a C₁ to C₃ alkyl group, and
wherein polyol (b1) does not contain at least one tertiary amine group providing autocatalytic function;
in the presence of
(c) at least one gelling amine catalyst, which is triethylenediamine; 3-hydroxymethyl quinuclidine, 3-quinuclidinol; imidazole; 1,2-dimethylimidazole; 1-methylimidazole; 2-methyl-2-imidazolone; 1,5- diazabicyclo (4.3.0)non-ene; 1,8-diazabicyclo (5.4.0)undec-7-ene; N, N'-dimethylpiperazine; 2,4-diamino-6-methyl-1,3,5-triazine; dimethyl benzylamine, N-methyl pyrrolidone, N-vinyl pyrrolidone, N-aminopropyl-pyrrolidine, N-methyl morpholine, N-ethyl morpholine, dimethylcyclohexylamine or a mixture thereof and being not more than 80 percent, on a molar basis, acid blocked;
(d) water as a blowing agent; and
(e) optionally additives, catalysts or auxiliary agents known per se for the production of polyurethane foams.

2. The process of Claim 1 wherein polyol (b2) is an alkylene oxide adduct of an initiator having N-methyl, N,N- dimethyl amino groups, or a mixture thereof.

3. The process of Claim 1 wherein the gelling amine catalyst (c) is triethylenediamine, 1,2-dimethylimidazole, 1,8- diazabicyclo (5.4.0) undec-7-ene, 3-hydroxymethylquinuclidine.

4. The process of Claim 1 wherein the gelling amine catalyst is partially blocked with an organic acid, an amino- acid, or non-organic acid.

5. The process of Claim 4 wherein the gelling amine catalyst is partially blocked with an organic acid containing a carboxylic acid.

6. The process of Claim 5 where the organic acid further contains one or more hydroxyl groups.

7. The process of Claim 6 wherein the organic acid is salicyclic or glycolic acid or gluconic acid.

8. The process of Claim 1 wherein the gelling amine catalyst is not more than 50 percent acid blocked on a molar basis.

9. A flexible foam prepared by any one of the preceding claims.

10. A polyol composition comprising
from 5 to 98 percent by weight, based on the total amount of polyol composition (b), of a polyol compound (b1) having a functionality of 2 to 8 and a hydroxyl number of from 15 to 200 and
the remaining from 2 to 95 by weight, based on the total amount of polyol composition (b), of a polyol compound (b2) having a functionality of 2 to 8, a hydroxyl number of from 15 to 200 and containing at least one tertiary amine group providing autocatalytic function, which is an alkylene oxide adduct of an initiator having N-alkyl, N,N- dialkyl amino groups, or a mixture thereof, wherein the alkyl group is a C₁ to C₃ alkyl group, and wherein polyol (b1) does not contain at least one tertiary amine group providing autocatalytic function;
in the presence of
(c) at least one gelling amine catalyst, which is triethylenediamine; 3-hydroxymethyl quinuclidine, 3-quinuclidinol; imidazole; 1,2-dimethylimidazole; 1-methylimidazole; 2-methyl-2-imidazolone; 1,5- diazabicyclo (4.3.0)non-ene; 1,8-diazabicyclo (5.4.0)undec-7-ene; N, N'-dimethylpiperazine; 2,4-diamino-6-methyl-1,3,5-triazine; dimethyl benzylamine, N-methyl pyrrolidone, N-vinyl pyrrolidone, N-aminopropyl-pyrrolidine, N-methyl morpholine, N-ethyl morpholine, dimethylcyclohexylamine or a mixture thereof and being not more than 80 percent, on a molar basis, acid blocked.

## Patentansprüche

1. Ein Verfahren zur Herstellung eines biegsamen Polyurethanschaumstoffs durch Reaktion einer Mischung aus
(a) mindestens einem flüssigen organischen Polyisocyanat mit
(b) einer Polyolzusammensetzung, die Folgendes beinhaltet:
zu 5 bis 98 Gewichtsprozent, bezogen auf die Gesamtmenge der Polyolzusammensetzung (b), eine Polyolverbindung (b1) mit einer Funktionalität von 2 bis 8 und einer Hydroxylzahl von 15 bis 200 und
wobei die restlichen 2 bis 95 Gewichtsprozent, bezogen auf die Gesamtmenge der Polyolzusammensetzung (b), aus einer Polyolverbindung (b2) mit einer Funktionalität von 2 bis 8, einer Hydroxylzahl von 15 bis 200 zusammengesetzt sind und eine autokatalytische Funktion bereitstellende tertiäre Amingruppe enthalten, die ein Alkylenoxidaddukt eines Initiators mit N-Alkyl-, N,N-Dialkylaminogruppen oder einer Mischung davon ist, wobei die Alkylgruppe eine C₁-C₃-Alkylgruppe ist, und
wobei Polyol (b1) nicht mindestens eine tertiäre Amingruppe, die autokatalytische Funktion bereitstellt, enthält;
in der Gegenwart von
(c) mindestens einem Amin-Katalysator zur Gelbildung, der Triethylendiamin; 3-Hydroxymethyl-chinuclidin, 3-Chinuclidinol; Imidazol; 1,2-Dimethylimidazol; 1-Methylimidazol; 2-Methyl-2-imidazolon; 1,5-Diazabicyclo(4.3.0)non-en; 1,8-Diazabicyclo(5.4.0)undec-7-en; N, N'-Dimethylpiperazin; 2,4-Diamino-6-methyl-1,3,5-triazin; Dimethylbenzylamin, N-Methylpyrrolidon, N-Vinylpyrrolidon, N-Aminopropylpyrrolidin, N-Methylmorpholin, N-Ethylmorpholin, Dimethylcyclohexylamin oder eine Mischung davon ist und auf einer molaren Basis nicht mehr als zu 80 Prozent säureblockiert ist;
(d) Wasser als einem Treibmittel; und
(e) optional Zusatzstoffen, Katalysatoren oder Hilfsmitteln, die per se für die Herstellung von Polyurethanschaumstoffen bekannt sind.

2. Verfahren gemäß Anspruch 1, wobei Polyol (b2) ein Alkylenoxidaddukt eines Initiators mit N-Methyl-, N,N-Dimethylaminogruppen oder einer Mischung davon ist.

3. Verfahren gemäß Anspruch 1, wobei der Amin-Katalysator zur Gelbildung (c) Triethylendiamin, 1,2-Dimethylimidazol, 1,8-Diazabicyclo(5.4.0)undec-7-en, 3-Hydroxymethylchinuclidin ist.

4. Verfahren gemäß Anspruch 1, wobei der Amin-Katalysator zur Gelbildung teilweise mit einer organischen Säure, einer Aminosäure oder einer nicht organischen Säure blockiert ist.

5. Verfahren gemäß Anspruch 4, wobei der Amin-Katalysator zur Gelbildung teilweise mit einer organischen Säure blockiert ist, die eine Carbonsäure enthält.

6. Verfahren gemäß Anspruch 5, wobei die organische Säure ferner eine oder mehrere Hydroxylgruppen enthält.

7. Verfahren gemäß Anspruch 6, wobei die organische Säure Salicyl- oder Glykolsäure oder Gluconsäure ist.

8. Verfahren gemäß Anspruch 1, wobei der Amin-Katalysator zur Gelbildung auf einer molaren Basis nicht mehr als zu 50 Prozent säureblockiert ist.

9. Ein biegsamer Schaumstoff, der gemäß einem der vorhergehenden Ansprüche angefertigt ist.

10. Eine Polyolzusammensetzung, die Folgendes beinhaltet:
zu 5 bis 98 Gewichtsprozent, bezogen auf die Gesamtmenge der Polyolzusammensetzung (b), eine Polyolverbindung (b1) mit einer Funktionalität von 2 bis 8 und einer Hydroxylzahl von 15 bis 200 und
die restlichen 2 bis 95 Gewichtsprozent, bezogen auf die Gesamtmenge der Polyolzusammensetzung (b), aus einer Polyolverbindung (b2) mit einer Funktionalität von 2 bis 8, einer Hydroxylzahl von 15 bis 200 und mindestens eine autokatalytische Funktion bereitstellende tertiäre Amingruppe enthalten, die ein Alkylenoxidaddukt eines Initiators mit N-Alkyl-, N,N-Dialkylaminogruppen oder einer Mischung davon ist, wobei die Alkylgruppe eine C₁-C₃-Alkylgruppe ist, und wobei Polyol (b1) nicht mindestens eine tertiäre Amingruppe, die autokatalytische Funktion bereitstellt, enthält,
in der Gegenwart von
(c) mindestens einem Amin-Katalysator zur Gelbildung, der Triethylendiamin; 3-Hydroxymethyl-chinuclidin, 3-Chinuclidinol; Imidazol; 1,2-Dimethylimidazol; 1-Methylimidazol; 2-Methyl-2-imidazolon; 1,5-Diazabicyclo(4.3.0)non-en; 1,8-Diazabicyclo(5.4.0)undec-7-en; N, N'-Dimethylpiperazin; 2,4-Diamino-6-methyl-1,3,5-triazin; Dimethylbenzylamin, N-Methylpyrrolidon, N-Vinylpyrrolidon, N-Aminopropylpyrrolidin, N-Methylmorpholin, N-Ethylmorpholin, Dimethylcyclohexylamin oder eine Mischung davon ist und auf einer molaren Basis nicht mehr als zu 80 Prozent säureblockiert ist.

## Revendications

1. Un procédé pour la production d'une mousse de polyuréthane souple par réaction d'un mélange
(a) d'au moins un polyisocyanate organique liquide avec
(b) une composition de polyols comprenant
de 5 à 98 pour cent en poids, rapporté à la quantité totale de la composition de polyols (b), d'un composé polyol (b1) ayant une fonctionnalité de 2 à 8 et un indice d'hydroxyle allant de 15 à 200 et
le reste allant de 2 à 95 pour cent en poids, rapporté à la quantité totale de la composition de polyols (b), étant composé d'un composé polyol (b2) ayant une fonctionnalité de 2 à 8, un indice d'hydroxyle allant de 15 à 200 et contenant au moins un groupe amine tertiaire procurant une fonction autocatalytique, qui est un adduit d'oxyde d'alkylène d'un initiateur ayant des groupes N-alkyl, N,N-dialkylamino, ou un mélange de ceux-ci, le groupe alkyle étant un groupe alkyle en C₁ à C₃, et
le polyol (b1) ne contenant pas au moins un groupe amine tertiaire procurant une fonction autocatalytique ;
en présence
(c) d'au moins un catalyseur amine de gélification, qui est la triéthylène diamine ; la 3-hydroxyméthylquinuclidine, le 3-quinuclidinol ; l'imidazole ; le 1,2-diméthylimidazole ; le 1-méthylimidazole ; la 2-méthyl-2-imidazolone ; le 1,5-diazabicyclo(4.3.0)nonène ; le 1,8-diazabicyclo(5.4.0)undéc-7-ène ; la N,N'-diméthylpipérazine ; la 2,4-diamino-6-méthyl-1,3,5-triazine ; la diméthylbenzylamine, la N-méthylpyrrolidone, la N-vinylpyrrolidone, la N-aminopropylpyrrolidine, la N-méthylmorpholine, la N-éthylmorpholine, la diméthylcyclohexylamine ou un mélange de ceux-ci et n'étant pas bloqué par un acide à hauteur de plus de 80 pour cent, sur une base molaire ;
(d) d'eau en tant qu'agent d'expansion ; et
(e) facultativement d'additifs, de catalyseurs ou d'agents auxiliaires connus en tant que tels pour la production de mousses de polyuréthane.

2. Le procédé de la revendication 1 dans lequel le polyol (b2) est un adduit d'oxyde d'alkylène d'un initiateur ayant des groupes N-méthyl, N,N-diméthylamino, ou un mélange de ceux-ci.

3. Le procédé de la revendication 1 dans lequel le catalyseur amine de gélification (c) est la triéthylène diamine, le 1,2-diméthylimidazole, le 1,8-diazabicyclo(5.4.0)undéc-7-ène, la 3-hydroxyméthylquinuclidine.

4. Le procédé de la revendication 1 dans lequel le catalyseur amine de gélification est en partie bloqué par un acide organique, un acide aminé, ou un acide non organique.

5. Le procédé de la revendication 4 dans lequel le catalyseur amine de gélification est en partie bloqué par un acide organique contenant un acide carboxylique.

6. Le procédé de la revendication 5 où l'acide organique contient en outre un ou plusieurs groupes hydroxyle.

7. Le procédé de la revendication 6 dans lequel l'acide organique est l'acide salicylique ou glycolique ou l'acide gluconique.

8. Le procédé de la revendication 1 dans lequel le catalyseur amine de gélification n'est pas bloqué par un acide à hauteur de plus de 50 pour cent sur une base molaire.

9. Une mousse souple préparée par n'importe laquelle des revendications précédentes.

10. Une composition de polyols comprenant
de 5 à 98 pour cent en poids, rapporté à la quantité totale de la composition de polyols (b), d'un composé polyol (b1) ayant une fonctionnalité de 2 à 8 et un indice d'hydroxyle allant de 15 à 200 et
le reste allant de 2 à 95 en poids, rapporté à la quantité totale de la composition de polyols (b), d'un composé polyol (b2) ayant une fonctionnalité de 2 à 8, un indice d'hydroxyle allant de 15 à 200 et contenant au moins un groupe amine tertiaire procurant une fonction autocatalytique, qui est un adduit d'oxyde d'alkylène d'un initiateur ayant des groupes N-alkyl, N,N-dialkylamino, ou un mélange de ceux-ci, le groupe alkyle étant un groupe alkyle en C₁ à C₃, et le polyol (b1) ne contenant pas au moins un groupe amine tertiaire procurant une fonction autocatalytique ;
en présence
(c) d'au moins un catalyseur amine de gélification, qui est la triéthylène diamine ; la 3-hydroxyméthylquinuclidine, le 3-quinuclidinol ; l'imidazole ; le 1,2-diméthylimidazole ; le 1-méthylimidazole ; la 2-méthyl-2-imidazolone ; le 1,5-diazabicyclo(4.3.0)nonène ; le 1,8-diazabicyclo(5.4.0)undéc-7-ène ; la N,N'-diméthylpipérazine ; la 2,4-diamino-6-méthyl-1,3,5-triazine ; la diméthylbenzylamine, la N-méthylpyrrolidone, la N-vinylpyrrolidone, la N-aminopropylpyrrolidine, la N-méthylmorpholine, la N-éthylmorpholine, la diméthylcyclohexylamine ou un mélange de ceux-ci et n'étant pas bloqué par un acide à hauteur de plus de 80 pour cent, sur une base molaire.
